# EUROPÄISCHE PATENTSCHRIFT

(11) **EP 0 614 725 B1**
(45) Veröffentlichungstag und Bekanntmachung des Hinweises auf die Patenterteilung: **14.02.1996**
(21) Anmeldenummer: 94810123.3
(22) Anmeldetag: 28.02.1994
(51) Int. Cl.: B23Q 7/14

(54) **Einrichtung zum positionsdefinierten Aufspannen eines Werkstücks am Arbeitsplatz einer Bearbeitungsmaschine**
Device for induced clamping of a workpiece on a workstation of a machine tool
Dispositif pour l'abloquage indixé d'une pièce au poste de travail d'une machine d'usinage

(30) Priorität: 09.03.1993 DE 4307342
(43) Veröffentlichungstag der Anmeldung: 14.09.1994
(73) Patentinhaber: Erowa AG, CH-5734 Reinach (CH)
(72) Erfinder: Obrist, Basil, CH-5728 Gontenschwil (CH); Troxler, Ferdinand, CH-6215 Schenkon (CH)
(74) Vertreter: Rottmann, Maximilian R.

(56) Entgegenhaltungen:
- EP-A- 0 267 352
- EP-A- 0 403 428
- EP-A- 0 485 365
- DE-A- 4 116 103
- FR-A- 2 469 982
- FR-A- 2 665 857
- GB-A- 1 096 605
- US-A- 4 645 391
- US-A- 4 928 939

## Beschreibung

Die vorliegende Erfindung betrifft eine Einrichtung zum positionsdefinierten Aufspannen eines Werkstücks am Arbeitsplatz einer Bearbeitungsmaschine, mit einem am Arbeitsplatz der Bearbeitungsmaschine zu fixierenden Untersatz und einem auf den Untersatz aufsetzbaren und daran festspannbaren Werkstückträger, ferner mit Richtelementen am Untersatz und am Werkstückträger, welche paarweise zusammenarbeiten und den Werkstückträger in drei zueinander senkrechten Koordinatenachsen (X, Y, Z) und winkelgerecht auf den Untersatz ausrichten, und mit einer Spannvorrichtung, deren Spannkraft den Werkstückträger in der durch die Richtelemente festgelegten Position am Untersatz festhält, wobei als Richtelementepaare für die Festlegung der Position in einer zur Wirkungslinie der Spannkraft parallelen Koordinatenachse (Z) einander gegenüberstehende Anschlagflächen am Untersatz und am Werkstückträger vorhanden sind, während für die Festlegung der Position in den beiden anderen Koordinatenachsen (X, Y) für jede Koordinatenachse separat zwei lineare Richtelementepaare vorgesehen sind, welche je ein keilförmiges Zentrierlineal und ein Gegenstück mit einem dazu passenden Zentrierschlitz aufweisen, und wobei die Spannvorrichtung mehrere Spannorgane umfasst, welche je einen am Werkstückträger angeordneten Spannzapfen und ein am Untersatz angeordnetes Spannfutter aufweisen.

Aufspanneinrichtungen dieser Art sollen bei entsprechender Dimensionierung zum Aufspannen verhältnismässig grosser und schwerer Werkstücke geeignet sein und zudem die bei der spanabhebenden Bearbeitung auftretenden Kräfte ohne Beeinträchtigung der angestrebten Positioniergenauigkeit übertragen können.

Die Entwicklung grösserer Aufspanneinrichtungen stützt sich auf die mit Aufspanneinrichtungen kleinerer Bauart gemachten Erfahrungen. Bei einer der bekannten Aufspanneinrichtungen kleinerer Bauart sind je zwei lineare Richtelementepaare zur Festlegung der winkelgerechten Position in der durch zwei Koordinatenachsen (X, Y) gebildeten Koordinatenebene (X-Y) im Kreis um eine zentrale Spannvorrichtung angeordnet, wobei die Wirkungslinie der Spannvorrichtung in der dritten Koordinatenachse (Z) liegt und die Arbeitsflanken der keilförmigen Zentrierlineale und die Arbeitskanten der zugehörigen Zentrierschlitze radial zur Z-Achse verlaufen. Die Zentrierschlitze sind durch Aussparungen in einer gemeinsamen Platte gebildet, welche in Richtung der Z-Achse nachgiebig ist. Diese Platte ist am Werkstückträger angebracht, während die Zentrierlineale am Untersatz befestigt sind. Die Spannvorrichtung besteht aus einem im Untersatz befindlichen Spannfutter mit Kugelgesperre und einem am Werkstückträger vorstehenden Spannzapfen, der zum Aufspannen des Werkstückträgers in das Spannfutter am Untersatz einsetzbar ist. Zur Festlegung der Position in der Z-Achse dienen am Werkstückträger zentralsymmetrisch angebrachte Bolzen, welche mit ihrer Stirnseite auf Anschlagflächen am Untersatz stossen.

Aufspanneinrichtungen in dieser Ausführungsform weisen eine hohe Reproduzierbarkeit der Position des Werkstückträgers bezüglich des Untersatzes auf und haben sich zum positionsdefinierten Aufspannen von Werkstücken seit längerem bewährt, insbesondere wenn die beim Bearbeitungsvorgang auf die Werkstücke ausgeübten Kräfte vernachlässigbar klein sind, wie z.B. bei der elektroerosiven Bearbeitung.

Bei der spanabhebenden Bearbeitung begrenzt die Belastbarkeit solcher Aufspanneinrichtungen deren Anwendungsbereich im wesentlichen auf Werkstücke, deren Abmessungen nicht grösser sind als diejenigen der Aufspanneinrichtung selbst. Bei der Bearbeitung grösserer Werkstücke können an der Aufspanneinrichtung Kräfte auftreten, die unter Umständen so gross werden, dass die linearen Richtelemente und die Spannvorrichtung übermässig beansprucht werden und ihre Funktion nicht mehr in der gewünschten Weise und vor allem nicht mehr mit der erforderlichen Genauigkeit erfüllen können. Kritisch sind insbesondere von den Bearbeitungskräften auf den Werkstückträger bezüglich der Z-Achse ausgeübte Drehmomente, welche an den Arbeitsflanken der für die Festlegung der X-\und Y-Achse zuständigen Richtelementepaaren übermässig hohe, die Positioniergenauigkeit beeinträchtigende Druckkräfte erzeugen können. Diese Druckkräfte lassen sich einzig dadurch in zulässigen Grenzen halten, dass für die Bearbeitung grösserer Werkstücke grössere Aufspanneinrichtungen vorgesehen werden, bei denen die genannten linearen Richtelementepaare entsprechend stärker ausgebildet sind und einen genügend grossen radialen Abstand von der Z-Achse haben. Die beschriebene bekannte Aufspanneinrichtung ist jedoch von ihrem Aufbau her nicht geeignet, um sie durch einfach lineare Vergrösserung ihrer Dimensionen an die Grösse der zu bearbeitenden Werkstücke anzupassen. Insbesondere erweist sich die zentrale Anordnung der Spannvorrichtung als ungeeignet, da ein einziges Spannorgan infolge der höheren Spannkraft entsprechend gross ausfallen würde. Die Aufspanneinrichtung würde dadurch ziemlich unförmig und schwer und damit ungeeignet für die praktische Handhabung. Eine weitere Schwierigkeit besteht hinsichtlich der Anordnung der Bolzen für die Festlegung der Position in der Z-Achse. Befinden sich diese Bolzen in einem grösseren Abstand von der Wirkungslinie der Spannkraft, so ist mit einer Durchbiegung des Werkstückträgers zu rechnen, welche die Positioniergenauigkeit beeinträchtigt. Bei einer Anordnung der Bolzen nahe an der Wirkungslinie der Spannkraft können dagegen Kippmomente auftreten, die aus dem gleichen Grund unerwünscht sind.

Eine andere Lösung zum Aufspannen grösserer Werkstücke besteht gemäss der EP-A-0 403 428 darin, vier Aufspanneinrichtungen der beschriebenen kleineren Bauart vorzusehen, welche einzeln in den vier Ecken einer rechteckigen Palette angeordnet sind. An allen vier Aufspanneinrichtungen sind Richtelementepaare für die Festlegung der Position in der Z-Achse vorhanden. Nur eine erste der vier Aufspanneinrichtungen besitzt sowohl zwei lineare Richtelementepaare für die Festlegung der X-Achse als auch zwei solche zur Festlegung der Y Achse. Je eine Aufspanneinrichtung in den beiden benachbarten Ecken der Palette besitzt nur zwei lineare Richtelementepaare zur Festlegung der X-Achse bzw. der Y-Achse, während die vierte, der ersten diagonal gegenüberliegende Aufspanneinrichtung keine den Verlauf der X-Achse und der Y-Achse bestimmenden Richtelementepaare aufweist. Das Achsenkreuz befindet sich somit in einer Ecke der gesamten Aufspanneinrichtung. Dadurch können sich unterschiedliche Wärmedehnungen des Werkstückträgers und des Untersatzes über die gesamte Länge bzw. Breite der Aufspanneinrichtung nachteilig auswirken.

Mit Rücksicht auf die jeweils zentrale Anordnung der Spannvorrichtung und auf eine gleichmässige, kippmomentfreie Belastung derselben, sind die linearen Richtelementepaare für die Festlegung der X-Achse und der Y-Achse an jeder der betreffenden drei Aufspannvorrichtungen doppelt vorhanden, und zwar in jeweils diametraler Anordnung, so dass für die Festlegung jeder dieser Achsen also insgesamt vier lineare Richtelementepaare eingesetzt werden, obwohl aus statischen Gründen deren zwei ausreichen würden. Das gegenseitige Ausrichten der vier linearen Richtelementepaare erfordert ein überaus hohes Mass an Montagegenauigkeit, damit trotz der statisch überbestimmten Anordnung die Reproduzierbarkeit der Positionierung nicht beeinträchtigt wird. Im übrigen ist der Aufwand von vier kompletten Aufspanneinrichtungen mit je einer Spannvorrichtung und deren Zubehör für das positionsdefinierte Aufspannen eines Werkstücks verhältnismässig hoch.

Eine in dieser Beziehung einfachere Lösung besteht gemäss einem anderen Vorschlag darin, dass anstelle von vier kompletten Spannvorrichtungen nur eine Spannvorrichtung mit vier Spannorganen der genannten Art vorhanden sind, wobei die einzelnen Spannfutter der Spannorgane in den Untersatz eingebaut sind. Allerdings sind hier die Spannfutter zapfenförmig mit aussen liegender Kugelgesperre ausgebildet, während die Spannzapfen durch Spannhülsen ersetzt sind, welche in einen aus einem Guss bestehenden Werkstückträger eingegossen sind. Für die Festlegung der X- und Y-Achsen sind vier lineare Richtelementepaare zentralsymmetrisch angeordnet, so dass sich das Achsenkreuz in der Flächenmitte der Aufspanneinrichtung befindet, was hinsichtlich unterschiedlicher Wärmedehnungen von Werkstückträger und Untersatz günstiger ist als eine Anordnung des Achsenkreuzes in einer Ecke der Aufspanneinrichtung. Dabei sind die am Untersatz vorhandenen linearen Richtelemente durch Vorsprünge mit keilförmiger Nut und die mit diesen zusammenarbeitenden Richtelemente am Werkstückträger durch in diesen eingesetzte, endseitig eingespannte Federhülsen gebildet. Die vorstehenden Stirnseiten der Spannhülsen einerseits und mehrere, im Kreis um das Spannfutter angeordnete Vorsprünge andererseits bilden die Anschlagflächen für die Festlegung der Position in der Z-Achse.

Als Nachteil besteht bei dieser Aufspanneinrichtung die Möglichkeit, dass die linearen Richtelementepaare für die Festlegung der X- und Y-Achsen von gegebenenfalls auftretenden Querkräften nicht genügend entlastet sind. Solchen Querkräften wirken, wie bei allen derartigen Aufspanneinrichtungen, sonst nur noch die Reibungskräfte an den Auflageflächen für die Festlegung der Position in der Z-Achse entgegen. Im vorliegenden Fall sind diese Auflageflächen jedoch verhältnismässig klein (z.B. drei kleinflächige Auflagestellen pro Spannorgan), so dass trotz hoher Spannkräfte die durch Reibung erzielten Gegenkräfte für den genannten Zweck unter Umständen nicht ausreichen. Dadurch ist die winkelgerechte Position des Werkzeugträgers bezüglich des Untersatzes nicht unbedingt gewährleistet, da die als lineare Richtelemente verwendeten Federhülsen offenbar unter dem Einfluss der Querkräfte auch seitlich nachgeben können. Ein weiterer Nachteil besteht darin, dass der Aufbau des Werkstückträgers verhältnismässig kompliziert und aufwendig ist. Schliesslich lässt sich der Werkstückträger wegen der vorstehenden Spannhülsen nicht ohne weiteres, z.B. ohne zusätzliche Zwischenlagen, mit seiner Unterseite auf einer ebenen Lagerfläche abstellen. Es besteht sonst die Gefahr, dass die Stirnseiten der Spannhülsen beschädigt werden und dadurch die Massgenauigkeit der Anschlagflächen beeinträchtigt wird.

Das Ziel der Erfindung ist eine hinsichtlich der genannten Nachteile verbesserte Aufspanneinrichtung für grössere Beanspruchungen. Dabei sollen auch noch einige weitere Gesichtspunkte Berücksichtigung finden. Zum einen ist dem Umstand, dass in einem Fertigungsbetrieb die Werkstückträger in einer weit grösseren Anzahl benötigt werden als dazu passende Untersätze, in vermehrtem Masse dadurch Rechnung zu tragen, dass der Kostenanteil für den Werkstückträger entscheidend verringert wird. Zum anderen soll dem Bezüger und Benützer solcher Aufspanneinrichtungen vom Lieferant derselben die Möglichkeit geboten werden, auch Werkstückträger aus eigener Entwicklung anwenden zu können.

Die der Erfindung zugrunde liegende Aufgabe besteht demnach darin, eine Aufspanneinrichtung der eingangs genannten Art zu schaffen, welche insbesondere hinsichtlich des Werkstückträgers einfach, kostengünstig und anpassungsfähig aufgebaut ist und welche bei allen vorkommenden Belastungen die Einhaltung der erforderlichen Positioniergenauigkeit gewährleistet.

Die Lösung dieser Aufgabe lässt sich erreichen, indem erfindungsgemäss der Werkstückträger an der im aufgespannten Zustand dem Untersatz zugewandten Seite eine durchgehend ebene Oberfläche aufweist, welche bereichsweise die diesseitigen Anschlagflächen bildet und an welcher die diesseitigen linearen Richtelemente für die Festlegung der Koordinatenachsen (X, Y, Z) sowie die Spannzapfen der Spannorgane befestigt sind.

Mit diesem Konzept kann der Werkstückträger durch eine einfache Platte mit planparallelen Seitenflächen gebildet sein, welche z.B. lediglich mit Bohrungen bzw. Gewindebohrungen zum Befestigen der genannten linearen Richtelemente und der Spannzapfen und zum Befestigen des Werkstücks mittels Schrauben versehen sein muss. Diese Ausführung ist nicht nur äusserst kostengünstig, sondern bietet auch die Möglichkeit, dass ein Werkstückträger anderer Herkunft ohne grossen Aufwand an die Voraussetzungen zum Anbringen der Richtelemente und Spannzapfen inbezug auf einen bestimmten Untersatz angepasst werden kann.

Mit Vorteil weist die den Werkstückträger bildende Platte durchgehende Bohrungen für den Einsatz von Schrauben zum Befestigen der diesseitigen linearen Richtelemente und der Spannzapfen auf, damit sämtliche Befestigungsschrauben von der den zu befestigenden Teilen abgewandten Seite der Platte her bedienbar sind. Wenn zudem die Befestigungsschrauben in den betreffenden Durchgangsbohrungen radialen Spielraum haben, lässt sich die genaue Position der Spannzapfen und insbesondere der linearen Richtelemente dadurch festlegen, dass der Werkstückträger mit lose montierten Richtelementen und Spannzapfen auf einen fertigen Untersatz aufgesetzt und festgespannt wird. Dadurch richten sich die an der Platte zu befestigenden Teile auf die Gegenstücke am Untersatz aus. Hierauf können die Befestigungsschrauben zur Fixierung der von den genannten Teilen eingenommenen Position festgezogen werden. Auf diese Weise entfallen die sonst mit hoher Präzision herzustellenden Aufnahmen für die genannten Teile, und der Montageaufwand lässt sich durch die erwähnte Kalibriermethode erheblich verringern. Ferner wird es dadurch auch für den Hersteller eigener Werkstückträger einfacher, angelieferte Richtelemente und Spannzapfen mit der erforderlichen Genauigkeit selbst zu montieren.

Hinsichtlich der Anschlagflächen für die Festlegung der Position in der Z-Achse besteht eine bevorzugte Ausführungsform darin, dass die dem Untersatz zugeordneten Anschlagflächen von der Oberseite des Untersatzes abgesetzte Ringflächen sind, welche jeweils konzentrisch zu einem Spannfutter angeordnet sind und unmittelbar an dessen Bewegungsraum für den Spannzapfen angrenzen. Damit soll erreicht werden, dass die die Spannkraft aufnehmenden Anschlagflächen möglichst nahe am Wirkungszentrum derselben liegen, um durch die Spannkräfte auf die Platte ausgeübte Biegekräfte so gering wie möglich zu halten. Ferner soll der Flächeninhalt der Anschlagflächen möglichst gross sein, um genügend grosse Reibungskräfte zu erzielen, welche einer gegenseitigen Verschiebung der jeweils zusammenarbeitenden Anschlagflächen unter dem Einfluss von Querkräften entgegenwirken und damit eine seitliche Verschiebung des Werkstückträgers bezüglich des Untersatzes unterbinden.

Vorteilhafterweise ist der Flächeninhalt jeder Ringfläche um ein Mehrfaches grösser als diejenige des Querschnitts eines Spannzapfens an der am höchsten beanspruchten Stelle seiner Längsausdehnung. Unter diesen Umständen besteht die Gewähr, dass die Position des Werkzeugträgers innerhalb der X-Y-Ebene auch unter starker Belastung durch Querkräfte sich nicht über eine Toleranzgrenze hinaus verändert und die betreffenden Richtelementepaare nicht über Gebühr belastet werden.

Für die Festlegung der Koordinatenachsen (X, Y, Z) ist eine im Prinzip bekannte Lösung vorgesehen, bei der jedes lineare Richtelementepaar ein keilförmiges Zentrierlineal und ein Gegenstück mit einem dazu passenden Zentrierschlitz aufweist. Im vorliegenden Fall empfiehlt sich eine Konstruktion, bei der das mit einem keilförmigen Zentrierlineal zusammenarbeitende Gegenstück der linearen Richtelementepaare für die Festlegung der Koordinatenachsen (X, Y, Z) einen in Richtung der Z-Achse nachgiebigen, quer zur Z-Achse dagegen starren Teil aufweist, in welchem sich der Zentrierschlitz befindet, wobei vorzugsweise der den Zentrierschlitz aufweisende Teil sich in der Mitte des Gegenstücks zwischen zwei Befestigungsleisten befindet und durch biegeelastische Stege mit diesen Befestigungsleisten verbunden ist. Da die Gegenstücke mehr Flächenraum einnehmen als die Zentrierzapfen, kann es mit Rücksicht auf den Raumbedarf der Spannorgane zweckmässig sein, die den Zentrierschlitz aufweisenden Gegenstücke am Werkzeugträger zu befestigen, da die Spannzapfen weniger Flächenraum benötigen als die gegenüberliegenden Spannfutter am Untersatz.

Durch die Anordnung der Spannorgane und der linearen Richtelemente nahe an der Peripherie der Aufspanneinrichtung kann in der Mitte derselben Raum für den Einbau einer Aufspanneinrichtung kleinerer Bauart freigehalten werden. Die grössere Aufspanneinrichtung bildet dabei den Träger für die kleinere Aufspanneinrichtung und kann durch diese Ergänzungsmöglichkeit wahlweise für grössere oder kleinere Werkstücke eingesetzt werden.

Anhand der beigefügten Zeichnung wird nachstehend ein Ausführungsbeispiel der Erfindung näher erläutert. In der Zeichnung bedeuten:
- Fig. 1: einen Querschnitt durch den Untersatz der Aufspanneinrichtung;
- Fig. 2: einen Querschnitt durch den Werkstückträger der Aufspanneinrichtung;
- Fig. 3: Ansicht des Untersatzes von oben in kleinerem Massstab;
- Fig. 4: Ansicht des Werkstückträgers von unten in kleinerem Massstab;
- Fig. 5: Querschnitt durch die Aufspanneinrichtung gemäss den Fig. 1 und 2, Werkstückträger in einer Zwischenphase beim Aufsetzen auf den Untersatz; und
- Fig. 6: Querschnitt durch die Aufspanneinrichtung gemäss den Fig. 1 und 2, Werkstückträger auf dem Untersatz positioniert und festgespannt.

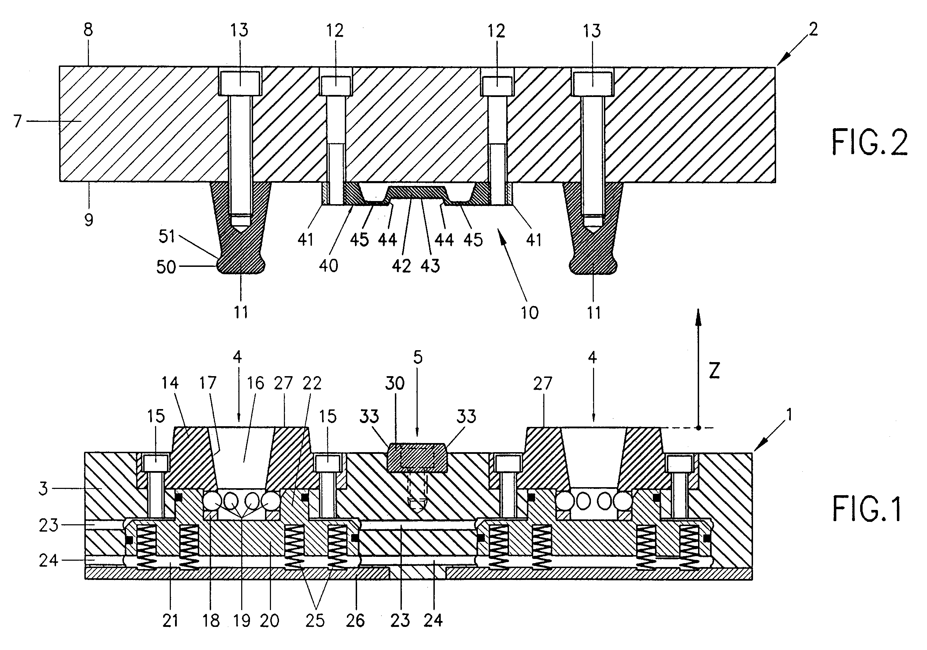

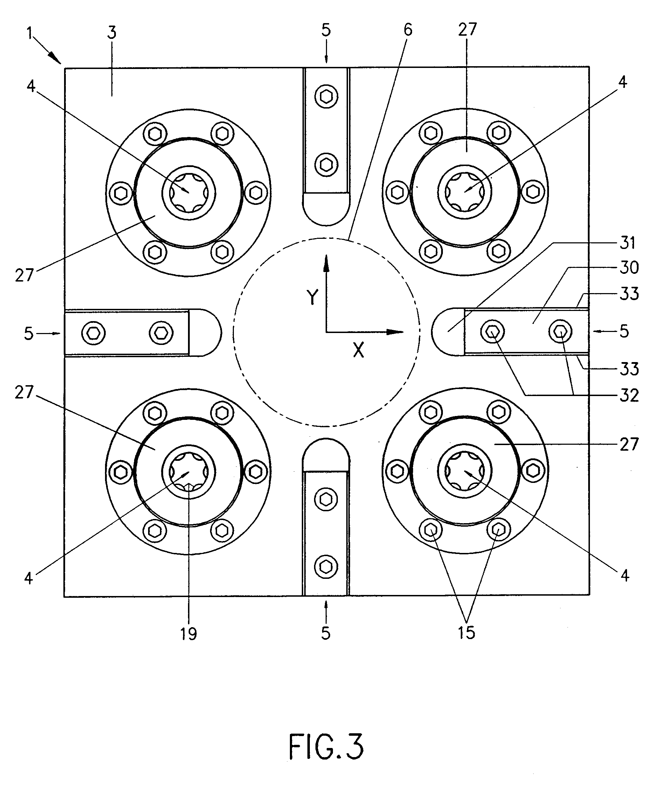

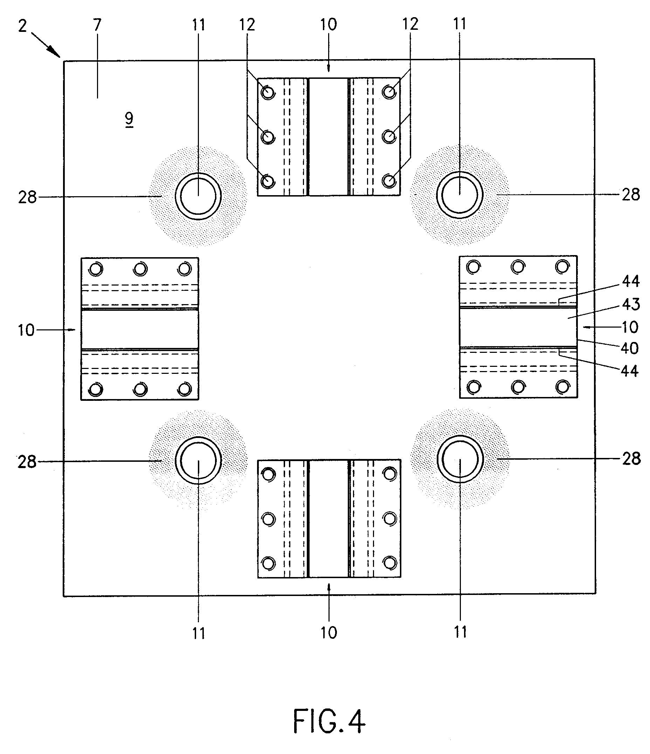

Die dargestellte Aufspanneinrichtung besteht aus einem Untersatz 1 (Fig. 1 und 3) und einem auf den Untersatz 1 aufsetzbaren und in einer definierten Position an diesem festspannbaren Werkstückträger 2 (Fig. 2 und 4).

Der am Arbeitsplatz einer Bearbeitungsmaschine oder gegebenenfalls auch einer Messstation zu fixierende Untersatz 1 weist ein plattenförmiges Gehäuse 3 mit quadratischer Grundfläche auf. Darin ist eine Spannvorrichtung untergebracht, welche vier Spannfutter 4 mit Kugelgesperre umfasst, die gemäss Fig. 3 in den vier Ecken des Gehäuses 3 zentralsymmetrisch angeordnet sind. Auf der Oberseite des Gehäuses 3 befinden sich ferner vier lineare Richtelemente 5, welche kreuzweise zueinander und je zwischen zwei benachbarten Spannfuttern 4 angeordnet sind. In der Mitte des Gehäuses 3 verbleibt ein freier Raum (in Fig. 3 durch einen strichpunktierten Kreis 6 angedeutet), welcher in an sich bekannter Weise den Untersatz einer Aufspanneinrichtung kleinerer Bauart, z.B. in der eingangs beschriebenen Ausführungsform, aufnehmen kann. Die Mittel zum Fixieren des Untersatzes 1 am Arbeitsplatz sind an sich bekannt und hier nicht dargestellt.

Der auf den Untersatz 1 aufsetzbare und an diesem festspannbare Werkstückträger 2 ist durch eine Platte 7 mit planparallelen Seitenflächen 8 und 9 gebildet, wobei auf der oberen Seitenfläche 8 das zu bearbeitende Werkstück in bekannter Weise befestigt wird. Die dazu erforderlichen Mittel, z.B. in der Platte 7 vorgesehene Gewindebohrungen, sind in der Zeichnung nicht dargestellt. Die untere Seitenfläche 9, welche im aufgespannten Zustand des Werkstückträgers 2 dem Untersatz 1 zugewandt ist, bildet eine durchgehend ebene Oberfläche, an welcher die diesseitigen, d.h. die mit den Richtelementen 5 am Untersatz 1 paarweise zusammenarbeitenden linearen Richtelemente 10 und die Spannzapfen 11 der Spanneinrichtung mittels Schrauben 12 bzw. 13 befestigt sind. Für die Befestigungsschrauben 12, 13 sind Durchgangsbohrungen vorgesehen, in welchen die Befestigungsschrauben radialen Spielraum haben.

Jedes am Untersatz 1 vorgesehene Spannfutter 4 enthält eine Spannhülse 14, welche in einer passenden Ausnehmung am Gehäuse 3 des Untersatzes 1 mittels Schrauben 15 befestigt ist und einen Hohlraum 16 zur Aufnahme eines Spannzapfens 11 aufweist. Der Hohlraum 16 ist in einem Eingangsabschnitt 17 der Spannhülse 14 nach aussen konisch erweitert. An diesen Eingangsabschnitt 17 schliesst sich ein ringförmiger Abschnitt 18 an, der mit einem eine Kugelgesperre bildenden Kranz von radial beweglichen Sperrkugeln 19 versehen ist. Die Betätigung der Sperrkugeln 19 beim Spannvorgang erfolgt mittels eines mit einem Druckmedium beidseitig beaufschlagbaren Kolbens 20, der in einem Zylinderraum 21 des Gehäuses 3 angeordnet ist und mit einem Ringansatz 22 den ringförmigen Abschnitt 18 der Spannhülse 14 umfasst. Die schwach konische Innenfläche des Ringansatzes 22 ist in ihrem Endbereich nach aussen stärker konisch erweitert, wobei dieser Hohlkonusteil des Ringansatzes 22 in bekannter Weise mit den Sperrkugeln 19 des Kugelgesperres zusammenarbeitet. Mit 23 und 24 sind die Zuleitungen für das Druckmedium zur Ober-\bzw. Unterseite des Kolbens 20 bezeichnet. Der Kolben 20 steht ausserdem unter dem Einfluss einer Anzahl Druckfedern 25, welche sich auf einer den Zylinderraum 21 nach unten abschliessenden Deckplatte 26 abstützen.

Die oberen Stirnseiten 27 aller Spannhülsen 14 liegen in einer von der Oberseite des Gehäuses 3 abgesetzten Ebene und bilden ringförmige Anschlagflächen, auf welche die den Werkstückträger 2 bildende Platte 7 mit ihrer ebenen Unterseite 9 zu liegen kommt. Die betreffenden Flächenbereiche 28 an der Platte 7 sind in Fig. 4 durch Schraffur markiert. Diese paarweise zusammenarbeitenden Anschlagflächen 27 und 28 bilden die Richtelementepaare für die Festlegung der Position des Werkstückträgers 2 in der Z-Achse. Am Untersatz 1 können Mittel vorhanden sein, die es in an sich bekannter Weise ermöglichen, die Anschlagflächen 27, 28 vor deren Zusammenschluss sauberzublasen. Dazu können Pressluftkanäle vorgesehen sein, welche an den Stirnseiten 27 der Spannhülsen 14 ausmünden.

Die am Untersatz 1 vorgesehenen linearen Richtelemente 5 sind gemäss den Fig. 1 und 3 prismatische Zentrierlineale 30, die in Nuten 31 des Gehäuses 3 eingesetzt und mittels Schrauben 32 darin befestigt sind. Die vorstehenden Längsseiten der Zentrierlineale 30 bilden Keilflächen 33, indem sie im Profil keilförmig zueinander verlaufen, wobei der Keilwinkel beidseitig etwa 7° beträgt. Die Montage der Zentrierlineale 30 ist hinsichtlich ihrer genauen Position nicht kritisch, da die jeweils in einer Flucht liegenden Keilflächen 33 zweier einander diametral gegenüberliegender Zentrierlineale 30 nach deren Montage gemeinsam auf das genaue Mass geschliffen werden können.

Jedes mit einem linearen Richtelement 5 des Untersatzes 1 zusammenarbeitende, als Gegenstücke mit Zentrierschlitz bezeichnete Richtelement 10 des Werkstückträgers 2 ist gemäss den Fig. 2 und 4 eine profilierte Platte 40 mit einem zwischen zwei Befestigungsleisten 41 befindlichen Mittelteil 42, welcher als Zentrierschlitz eine Nut 43 mit keilförmig zueinander verlaufenden Seitenflächen 44 aufweist, wobei der Keilwinkel wiederum beidseitig etwa 7° beträgt. Der Mittelteil 42 ist durch biegeelastische Stege 45 mit den Befestigungsleisten 41 verbunden und bildet auf diese Weise einen in Richtung der Z-Achse nachgiebigen, quer zur Z-Achse dagegen starren Teil.

Jeder der mit einem Spannfutter 14 zusammenarbeitende Spannzapfen 11 besitzt gemäss Fig. 2 an seinem freien Ende einen Wulst 50, der an seiner Hinterseite durch eine konische Ringfläche 51 begrenzt ist, an der die Sperrkugeln 19 des Spannfutters 14 zur Wirkung kommen.

Die Fig. 1 stellt den Untersatz 1 im Ruhezustand dar. Die Kolben 20 der Spannfutter 4 stehen ohne Druckbeaufschlagung einzig unter dem Einfluss der Druckfedern 25, welche die Kolben 20 im Anschlag an der Spannhülse 14 halten. Bei dieser Kolbenstellung befinden sich die Sperrkugeln 19 des Kugelgesperres in extremer Sperrlage, wobei an sich bekannte, nicht dargestellte Mittel die Sperrkugeln 19 daran hindern, aus ihrer Lagerung in den Hohlraum 16 der Spannhülse 14 zu fallen.

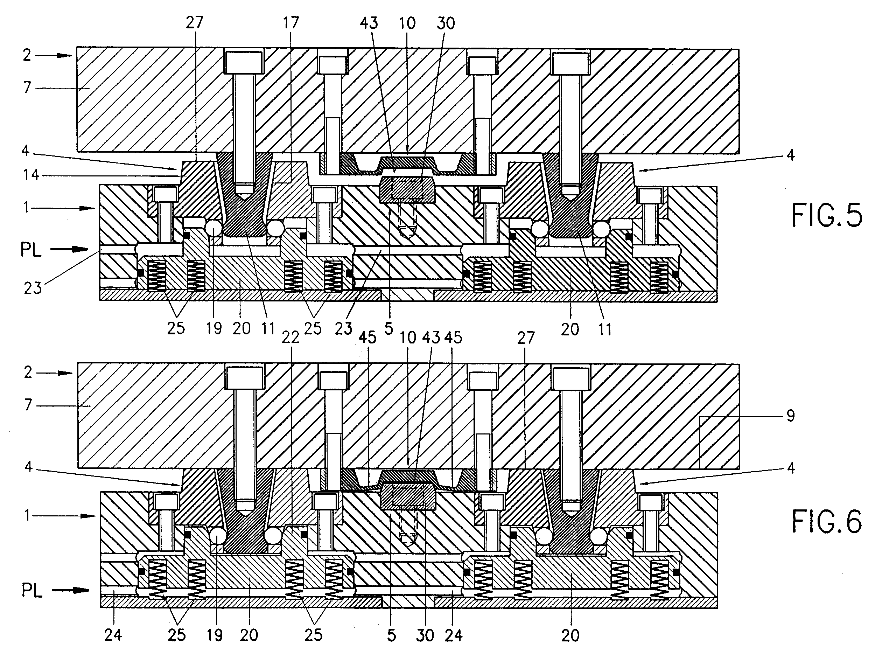

Zur Bereitstellung des Untersatzes 1 für die Aufnahme eines Werkstückträgers 2 wird gemäss Fig. 5 die Oberseite der Kolben 20 über die Zufuhrkanäle 23 mit einem Druckmedium, z.B. mit Pressluft PL beaufschlagt, so dass sich die Kolben 20 entgegen der Kraft der Druckfedern 25 von den Spannhülsen 14 weg in eine untere Endlage bewegen und dadurch die Kugelgesperre für den Durchlass der Spannzapfen 11 des Werkstückträgers 2 freigeben. Beim Einfahren eines Spannzapfens 11 in die betreffende Spannhülse 14 werden die Sperrkugeln 19 durch den endseitigen Wulst 50 (Fig. 2) der Spannzapfen 11 radial nach aussen verdrängt.

Beim Aufsetzen des Werkstückträgers 2 auf den Untersatz 1 sorgen die in den konischen Eingangsabschnitt 17 der Spannhülsen 14 einfahrenden Spannzapfen 11 für eine Vorpositionierung des Werkstückträgers 2, so dass die paarweise zusammenarbeitenden linearen Richtelementepaare 5, 10 miteinander in Eingriff kommen, wobei jeweils das Zentrierlineal 30 in die Nut 43 des Gegenstücks 10 eingreift. Sobald der Werkstückträger 2 auf den Untersatz 1 lose aufgesetzt ist und danach die Zufuhr der Pressluft PL durch die Kanäle 23 unterbrochen wird, schliessen die Druckfedern 25 die Kugelgesperre, indem sie die Kolben 20 gegen die Spannhülsen 14 drücken, wobei der jeweilige Ringansatz 22 des Kolbens 20 mit seinem Hohlkonusteil die Sperrkugeln 19 radial nach innen drängt, so dass sie den Wulst 50 des Spannzapfens 11 hintergreifen. Spätestens in dieser Phase werden die normalerweise vorhandenen Mittel zum Sauberblasen der Anschlagflächen 27, 28 in Betrieb gesetzt, die auch, in bekannter Weise, eine Überwachung des Spannvorgangs durch Messung des Staudrucks gestatten.

Das Festspannen des auf den Untersatz 1 aufgesetzten Werkstückträgers 2 erfolgt gemäss Fig. 6 durch die Beaufschlagung der Unterseite der Kolben 20 mit über die Kanäle 24 zugeführter Pressluft PL. Die Sperrkugeln 19 werden dadurch mit erhöhter Kraft radial einwärts gedrückt und bewirken durch ihren verstärkten Radialdruck gegen die konische Ringfläche 51 (Fig. 2) der Spannzapfen 11 das Einziehen der Spannzapfen 11 in die Spannfutter 4. Bei diesem Vorgang richten sich die linearen Richtelemente 5 genau auf die zugehörigen Richtelemente 10 aus, indem jedes keilförmige Zentrierlineal 30 sich in die betreffende Nut 43 am Gegenstück 10 einpasst, wobei es zu einem Flächenkontakt der einander jeweils zugeordneten Keilflächen 33, 44 (Fig. 1, 2) kommt. Dieses Einpassen findet statt, bevor die Platte 7 des Werkstückträgers 2 auf den ringförmigen Anschlagflächen 27 der Spannhülsen 14 reibungsschlüssig aufliegt. Damit sind die winkelgetreue Position des Werkstückträgers in der X-Y-Ebene und die Lage der Z-Achse bereits vor dem endgültigen Zusammenschluss des Werkstückträgers 2 mit dem Untersatz 1 festgelegt. In der Schlussphase des Zusammenschlusses werden die Zentrierlineale 30 kräftig in die Nuten 43 der Gegenstücke 10 gepresst, deren Mittelteil 42 sich unter dieser Krafteinwirkung in Richtung der Z-Achse durchbiegt. In dem in Fig. 6 dargestellten Endzustand des Zusammenschlusses liegt die Platte 7 des Werkstückträgers 2 mit ihrer ebenen Unterseite 9 unter hohem Druck an den Anschlagflächen 27 des Untersatzes 1 an. Dies ergibt im Verein mit dem verhältnismässig grossflächigen Kontakt einen Kraftschluss, der auch grosse Querkräfte aufzunehmen vermag. Infolgedessen werden die als lineare Richtelemente dienenden Gegenstücke 10 von Querkräften weitgehend entlastet. Auf diese Weise lässt sich eine allfällige Dehnung bzw. Stauchung der biegeelastischen Stege 45 und eine damit verbundene Querverschiebung des Werkstückträgers 2 in zulässigen Grenzen halten.

Der Werkstückträger 2 der beschriebenen Aufspanneinrichtung lässt sich ohne weiteres mit den Spannzapfen 11 als Stützen auf einer Lagerfläche abstellen, da die Stirnseiten der Spannzapfen 11 keine Richtfunktion haben und daher keiner besonderen Schonung bedürfen.

## Patentansprüche

1. Einrichtung zum positionsdefinierten Aufspannen eines Werkstücks am Arbeitsplatz einer Bearbeitungsmaschine, mit einem am Arbeitsplatz der Bearbeitungsmaschine zu fixierenden Untersatz (1) und einem auf den Untersatz aufsetzbaren und daran festspannbaren Werkstückträger (2), ferner mit Richtelementen (5, 10, 27, 28) am Untersatz und am Werkstückträger, welche als Richtelemente paarweise zusammenarbeiten und den Werkstückträger in drei zueinander senkrechten Koordinatenachsen (X, Y, Z) und winkelgerecht auf den Untersatz ausrichten, und mit einer Spannvorrichtung (4, 11), deren Spannkraft den Werkstückträger (2) in der durch die Richtelemente festgelegten Position am Untersatz (1) festhält, wobei die Richtelementepaare für die Festlegung der Position in einer zur Wirkungslinie der Spannkraft parallelen Koordinatenachse (Z) einander gegenüberstehende Anschlagflächen (27, 28) am Untersatz und am Werkstückträger vorhanden sind, während für die Festlegung der Position in den beiden anderen Koordinatenachsen (X, Y) für jede Koordinatenachse separat zwei lineare Richtelementepaare (5, 10) vorgesehen sind, welche je ein keilförmiges Zentrierlineal (30) und ein Gegenstück (40) mit einem dazu passenden Zentrierschlitz (43) aufweisen, und wobei die Spannvorrichtung mehrere Spannorgane (4, 11) umfasst, welche je einen am Werkstückträger (2) angeordneten Spannzapfen (11) und ein am Untersatz (1) angeordnetes Spannfutter (4) aufweisen, dadurch gekennzeichnet, dass der Werkstückträger (2) an der im aufgespannten Zustand dem Untersatz (1) zugewandten Seite (9) eine durchgehend ebene Oberfläche aufweist, welche bereichsweise die diesseitigen Anschlagflächen (28) bildet und an welcher die diesseitigen linearen Richtelemente (10) für die Festlegung der Koordinatenachsen (X, Y, Z) sowie die Spannzapfen (11) der Spannorgane (4, 11) befestigt sind.

2. Einrichtung nach Anspruch 1, dadurch gekennzeichnet, dass der Werkstückträger (2) durch eine Platte (7) mit planparallelen Seitenflächen (8, 9) gebildet ist.

3. Einrichtung nach Anspruch 2, dadurch gekennzeichnet, dass die Platte (7) durchgehende Bohrungen für den Einsatz von Schrauben (21, 13) zum Befestigen der diesseitigen linearen Richtelemente (10) und der Spannzapfen (11) aufweist.

4. Einrichtung nach Anspruch 3, dadurch gekennzeichnet, dass die Befestigungsschrauben (12, 13) in den betreffenden Durchgangsbohrungen radialen Spielraum haben.

5. Einrichtung nach Anspruch 1, dadurch gekennzeichnet, dass die dem Untersatz (1) zugeordneten Anschlagflächen von der Oberseite des Untersatzes abgesetzte Ringflächen (27) sind, welche jeweils konzentrisch zu einem Spannfutter (4) angeordnet sind und unmittelbar an dessen Bewegungsraum für den Spannzapfen (11) angrenzen.

6. Einrichtung nach Anspruch 5, dadurch gekennzeichnet, dass der Flächeninhalt jeder Ringfläche (27) um ein Mehrfaches grösser ist als diejenige des Querschnitts eines Spannzapfens (11) an der am höchsten beanspruchten Stelle seiner Längsausdehnung.

7. Einrichtung nach einem der vorhergehenden Ansprüche, dadurch gekennzeichnet, dass der Untersatz (1) ein plattenförmiges Gehäuse (3) mit viereckiger Grundfläche aufweist, in dem vier Spannfutter (4) mit Kugelgesperre untergebracht und in den vier Ecken des Gehäuses (3) zentralsymmetrisch angeordnet sind.

8. Einrichtung nach den Ansprüchen 5 und 7, dadurch gekennzeichnet, dass die Spannfutter je eine mit Sperrkugeln (19) versehene Spannhülse (14) aufweisen, welche über das Gehäuse (3) vorstehen und deren Stirnseiten die Anschlagflächen (27) des Untersatzes (1) bilden.

9. Einrichtung nach einem der vorhergehenden Ansprüche, dadurch gekennzeichnet, dass das mit dem keilförmigen Zentrierlineal (30) zusammenarbeitende Gegenstück (10) der linearen Richtelementepaare für die Festlegung der Koordinatenachsen (X, Y, Z) einen in Richtung der Z-Achse nachgiebigen, quer zur Z-Achse dagegen starren Teil (42) aufweist, in welchem sich der Zentrierschlitz (43) befindet.

10. Einrichtung nach Anspruch 9, dadurch gekennzeichnet, dass der den Zentrierschlitz (43) aufweisende Teil (42) sich in der Mitte des Gegenstücks (10) zwischen zwei Befestigungsleisten (41) befindet und durch biegeelastische Stege (45) mit diesen Befestigungsleisten (41) verbunden ist.

11. Einrichtung nach einem der vorhergehenden Ansprüche, dadurch gekennzeichnet, dass die keilförmigen Zentrierlineale (30) prismatisch ausgebildet, in Nuten (31) eingesetzt und mittels Schrauben (32) darin befestigt sind, wobei der aus den Nuten (31) vorstehende Teil der Längsseiten der Zentrierlineale (30) Keilflächen (33) bilden.

12. Einrichtung nach Anspruch 11, dadurch gekennzeichnet, dass der Keilwinkel der Keilflächen (33) der Zentrierlineale (30) beidseitig etwa 7° beträgt.

13. Einrichtung nach einem der vorhergehenden Ansprüche, dadurch gekennzeichnet, dass die für die Festlegung der Koordinatenachsen (X, Y, Z) vorhandenen linearen Richtelementepaare (5, 10) zwischen den Anschlagflächen (27, 28) derart angeordnet sind, dass sich das Achsenkreuz wenigstens annähernd in der Flächenmitte der Einrichtung befindet.

14. Einrichtung nach einem der vorhergehenden Ansprüche, dadurch gekennzeichnet, dass die durch keilförmige Zentrierlineale (30) gebildeten Richtelemente (5) am Untersatz (1) und die den Zentrierschlitz (43) aufweisenden Gegenstücke (10) am Werkzeugträger (2) befestigt sind.

15. Einrichtung nach Anspruch 7, dadurch gekennzeichnet, dass in der Mitte des Gehäuses (3) Raum für den Einbau einer Aufspanneinrichtung kleinerer Bauart freigehalten ist.

## Claims

1. Device for the induced clamping of a workpiece on a workstation of a machine tool, with a support (1) to be fixed on the workstation of the machine tool and a workpiece carrier (2) able to be placed on the support and able to be clamped thereto, furthermore with alignment members (5, 10, 27, 28) on the support and on the workpiece carrier, which cooperate in pairs as alignment members and align the workpiece carrier along three coordinate axes (X, Y, Z) at right angles to each other and at the correct angle on the support, and With a chucking device (4, 11), whereof the clamping force retains the workpiece carrier (2) on the support (1) in the position determined by the alignment members, whereby as pairs of alignment members for fixing the position along a coordinate axis (Z) parallel to the line of application of the clamping force, opposing stop faces (27, 28) are present on the support and on the workpiece carrier, whereas for fixing the position along the two other coordinate axes (X, Y) for each coordinate axis, two pairs of linear alignment members (5, 10) are provided separately, which each comprise a wedge-shaped centring rule (30) and a counterpart (40) with a matching centring slot (43), and the chucking device comprising several clamping members (4, 11), which each comprise a clamping journal (11) located on the workpiece carrier (2) and a chuck (4) located on the support (1), characterized in that on the side (9) facing the support (1) in the clamped state, the workpiece carrier (2) comprises a continuous flat surface, which in certain regions forms the stop faces (28) on this side and to which the linear alignment members (10) on this side for fixing the coordinate axes (X, Y, Z) as well as the clamping journals (11) of the clamping members (4, 11) are attached.

2. Device according to Claim 1, characterized in that the workpiece carrier (2) is formed by a plate (7) with plane parallel side faces (8, 9).

3. Device according to Claim 2, characterized in that the plate (7) comprises throughholes for the insertion of screws (21, 13) for fastening the linear alignment members (10) on this side and the clamping journals (11).

4. Device according to Claim 3, characterized in that the fastening screws (12, 13) have a radial clearance in the respective throughholes.

5. Device according to Claim 1, characterized in that the stop faces associated with the support (1) are annular surfaces (27) offset from the surface of the support, which are respectively arranged concentrically with respect to a chuck 4 and directly adjoin its movement space for the clamping journals (11).

6. Device according to Claim 5, characterized in that the surface area of each annular surface (27) is several times greater than that of the cross section of a clamping journal (11) at the point of its longitudinal extent subject to the greatest stress.

7. Device according to one of the preceding claims, characterized in that the support (1) comprises a plate-like housing (3) with a four-cornered base, in which four chucks (4) with a ball-locking mechanism are located and arranged centrally symmetrically in the four corners of the housing 3.

8. Device according to Claims 5 and 7, characterized in that the chucks each comprise a clamping sleeve (14) provided with locking balls (19), which clamping sleeves project beyond the housing (3) and whereof the end faces form the stop faces (27) of the support (1).

9. Device according to one of the preceding claims, characterized in that the counterpart (10) of the pairs of linear alignment members, cooperating with the wedge-shaped centring rule (30), for the fixing of the coordinate axes (X, Y, Z) comprises a part (42) which is resilient in the direction of the Z-axis, but rigid at right angles to the Z-axis, in which part (42) the centring slot (43) is located.

10. Device according to Claim 9, characterized in that the part (42) comprising the centring slot (43) is located in the centre of the counterpart (10) between two attachment bars (41) and is connected by resilient webs (45) to these attachment bars (41).

11. Device according to one of the preceding claims, characterized in that the wedge-shaped centring rules (30) have a prismatic construction, are inserted in grooves (31) and fastened therein by means of screws (32), the part of the longitudinal sides of the centring rules (30) projecting from the grooves (31) forming wedge-surfaces (33).

12. Device according to Claim 11, characterized in that the wedge angle of the wedge surfaces (33) of the centring rules (30) amounts to approximately 7° on both sides.

13. Device according to one of the preceding claims, characterized in that the pairs of linear alignment members (5, 10) existing for the fixing of the coordinate axes (X, Y, Z) are located between the stop faces (27, 28) so that the axis intersection is located at least approximately in the centre of the surface of the device.

14. Device according to one of the preceding claims, characterized in that the alignment members (5) formed by wedge-shaped centring rules (30) are attached to the support (1) and the counterparts (10) comprising the centring slot (43) are attached to the tool carrier (2).

15. Device according to Claim 7, characterized in that space for the installation of a clamping device of smaller construction is kept free in the centre of the housing (3).

## Revendications

1. Dispositif pour le blocage indexé d'une pièce au poste de travail d'une machine d'usinage, équipé d'un socle (1) à fixer au poste de travail de la machine d'usinage et d'un porte-pièce (2) qui peut être posé sur le socle et serré dessus, ainsi que d'éléments d'alignement (5, 10, 27, 28) sur le socle et le porte-pièce, qui travaillent conjointement en tant qu'éléments d'alignement par paire et alignent le porte-pièce dans trois axes de cordonnées (X, Y, Z) perpendiculaires entre eux et avec le bon angle par rapport au socle, et équipé d'un dispositif de serrage (4, 11), dont la force de serrage maintient le porte-pièce dans la position fixée par les éléments d'alignement sur le socle (1), des surfaces de butée (27, 28) se faisant face existant sur le socle et le porte-pièce en guise d'éléments d'alignement pour la fixation de la position dans un axe de coordonnées (Z) parallèle à la ligne d'action de la force de serrage, tandis que pour la fixation de la position dans les deux autres axes de coordonnées (X, Y) l'on prévoit pour chaque axe de coordonnées séparément deux paires linéaires d'éléments d'alignement (5, 10) qui présentent chacune une règle de centrage (30) en forme de clavette et une pièce inverse (40) pourvue d'une fente de centrage (43) adaptée à cet effet, le dispositif de serrage comprenant plusieurs organes de serrage (4, 11) qui présentent chacun un tenon de serrage (11) disposé sur le porte-pièce (2) et un mandrin (4) disposé sur le socle (1), caractérisé en ce que le porte-pièce (2) présente du côté (9) tourné vers le socle (1) à) l'état serré une surface plane en continu qui forme par zones les surfaces de butée (28) de ce côté et sur laquelle sont fixés les éléments d'alignement (10) linéaires de ce côté pour la fixation des axes de coordonnées (X, Y, Z) et les tenons de serrage (11) des organes de serrage (4, 11).

2. Dispositif selon la revendication 1, caractérisé en ce que le portepièce (2) est formé par une plaque (7) avec des faces latérales planes et parallèles (8, 9).

3. Dispositif selon la revendication 2, caractérisé en ce que la plaque (7) présente des alésages continus pour l'utilisation de vis (21, 13) pour la fixation des éléments d'alignement (10) linéaires de ce côté et des tenons de serrage (11).

4. Dispositif selon la revendication 3, caractérisé en ce que les vis de fixation (12, 13) ont du jeu radial dans les alésages de passage concernés.

5. Dispositif selon la revendication 1, caractérisé en ce que les surfaces de butée attribuées au socle (1) sont des surfaces annulaires (27) décalées par rapport à la face supérieure du socle, qui sont disposées respectivement de façon concentrique par rapport à un mandrin de serrage (4) et touchent directement son débattement pour le mandrin de serrage (11).

6. Dispositif selon la revendication 5, caractérisé en ce que l'aire de chaque surface annulaire (27) est plusieurs fois supérieure à celle de la section d'un tenon de serrage (11) à l'endroit le plus sollicité de sa dimension longitudinale.

7. Dispositif selon l'une quelconque des revendications précédentes, caractérisé en ce que le socle (1) présente un boîtier (3) en forme de plaque avec base carrée dans lequel sont logés quatre mandrins de serrage (4) avec verrouillage à billes et sont disposés quatre angles du boîtier (3) avec symétrie centrale.

8. Dispositif selon les revendications 5 et 7, caractérisé en ce que les mandrins de serrage présentent chacun une douille de serrage (14) dotée de billes de verrouillage (19), douilles qui débordent du boîtier (3) et dont les faces frontales forment les surfaces de butée (27) du socle.

9. Dispositif selon l'une quelconque des revendications ci-dessus, caractérisé en ce que la pièce inverse, (10) travaillant conjointement avec la règle de centrage (30) en forme de clavette, des paires d'éléments d'alignement linéaires pour la fixation des axes de cordonnées (X, Y, Z) présente une partie (42) souple dans le sens de l'axe Z mais rigide transversalement à l'axe Z, partie dans lequel se trouve la fente de centrage (43).

10. Dispositif selon la revendication 9, caractérisé en ce que la partie (42) présentant la fente de centrage (43) se trouve au ventre de la pièce inverse (10) entre deux baguettes de fixation (41) et est reliée par des barrettes (45) flexibles à ces baguettes de fixation (41).

11. Dispositif selon l'une quelconque des revendications précédentes, caractérisé en ce que les règles de centrage (30) en forme de clavette sont conçues en forme de prisme, insérées dans des rainures (31) et fixées dedans au moyen de vis (32), la partie dépassant des rainures (31) des grands côtés des règles de centrage (30) formant des surfaces de clavette (33).

12. Dispositif selon la revendication 11, caractérisé en ce que l'angle des surfaces de clavette (33) des règles de centrage (30) est de 7° environ des deux côtés.

13. Dispositif selon l'une quelconque des revendications précédentes, caractérisé en ce que les paires d'éléments d'alignement (5, 10) linéaires existant pour la fixation des axes de cordonnées (X, Y, Z) sont disposées entre les surfaces de butée (27, 28) de telle manière que le système d'axes se trouve au moins approximativement au centre de gravité du dispositif.

14. Dispositif selon l'une quelconque des revendications précédentes, caractérisé en ce que les éléments d'alignement (5) formées par des règles de centrage (30) en forme de clavette sont fixés sur le socle (1) et les pièces inverses (10) présentant la fente de centrage (43) sur le porte-pièce.

15. Dispositif selon la revendication 7, caractérisé en ce que, au centre du boîtier (3), on laisse de l'espace pour le montage d'un dispositif de serrage de conception assez petite.
